# EUROPÄISCHE PATENTSCHRIFT

(11) **EP 0 936 348 B1**
(45) Veröffentlichungstag und Bekanntmachung des Hinweises auf die Patenterteilung: **17.09.2003**
(21) Anmeldenummer: 99100964.8
(22) Anmeldetag: 20.01.1999
(51) Int. Cl.: F01N 11/00, G01N 27/02, G01M 15/00

(54) **Verfahren zur Bestimmung des Füllgrads oder der Güte eines Gase speichernden Katalysators**
Method for determining the filling ratio or the quality of a gas storing catalyst
Procédé pour déterminer le degré de remplissage ou la qualité d'un catalyseur d'accumulation de gaz

(30) Priorität: 13.02.1998 DE 19805928
(43) Veröffentlichungstag der Anmeldung: 18.08.1999
(73) Patentinhaber: DaimlerChrysler AG, 70567 Stuttgart (DE)
(72) Erfinder: Busch, Michael-Rainer, 73061 Ebersbach (DE); Knezevic, Aleksandar Dr., 80538 München (DE); Moos, Ralph Dr., 88048 Friedrichshafen (DE); Plog, Carsten Dr., 88677 Markdorf (DE)

(56) Entgegenhaltungen:
- WO-A-98/10272
- FR-A- 2 746 142
- US-A- 5 497 099
- US-A- 5 555 724
- PATENT ABSTRACTS OF JAPAN vol. 011, no. 136 (C-419), 30. April 1987 (1987-04-30) & JP 61 274748 A (DOUDENSEI MUKI KAGOUBUTSU GIJUTSU KENKYU KUMIAI), 4. Dezember 1986 (1986-12-04)

## Beschreibung

Die Erfindung betrifft ein Verfahren zur Bestimmung des Füllgrades oder der Güte eines mittels eines Speichermediums Gase speichernden Katalysators.

Immer schärfere Abgasgesetze verbunden mit dem Druck zur Reduzierung des Kraftstoffverbrauches erfordern neue Konzepte sowohl für den Verbrennungsmotor als auch für die Abgasreinigung. Dies bedingt auch neue Konzepte für die Überwachung von Abgasreinigungsanlagen.

In Zusammenhang mit Katalysatoren, welche neben ihrer katalytischen Funktion zusätzlich auch Gase speichern, treten insbesondere die nachfolgend beschriebenen Probleme auf.

Beim stöchiometrisch betiebenen Ottomotor (sog. "λ=1-Motor") wird das Luft/Kraftstoffverhältnis λ des Rohabgases mit Hilfe einer ersten λ-Sonde detektiert. Je nach Regelabweichung vom Idealzustand λ=1 wird dann das Luft/Kraftstoffverhältnis etwas nachgeregelt. In der Praxis erhält man so eine λ-Schwingung des Rohabgases um den stöchiometrischen Punkt (λ=1). Im zeitlichen Mittel muß aber λ=1 eingehalten werden (vergl. Wiedenmann H.-M., Hötzel G., Riegel J., Weyl H.: ZrO₂-Lambda-Sonden für die Gemischregelung im Kraftfahrzeug. In: Schaumburg Hanno (Hrsg.): Sensoranwendungen, Teubner-Verlag, Stuttgart (1995) 371-399). Die Schwingungsfrequenz liegt im Bereich einiger zehntel Sekunden bis einiger Sekunden. Aufgrund der Sauerstoffspeicherfähigkeit des nach der ersten λ-Sonde angeordneten sog. "Drei-Wege-Katalysators" findet immer eine optimale Konversion statt, solange der Katalysator noch in gutem Zustand ist. Mit abnehmender Katalysatorgüte, d.h. die Konversionsrate verringert sich und die Anspringtemperatur steigt, nimmt auch die Fähigkeit, Sauerstoff zu speichern, ab. Eine zweite, nach dem Katalysator angeordnete λ-Sonde wird dann die Regelschwingung detektieren können. Eine Katalysatorgüteerkennung ist möglich, indem das Verhältnis der Amplituden der ersten und zweiten λ-Sonde ausgewertet wird. Bei diesem Verfahren (vergl. Glöckler O., Mezger M.: Eigendiagnose moderner Motorsteuerungssysteme - Entwicklungsstand und erste Erfahrungen mit OBD2 für USA. 38-52.) handelt es sich jedoch um ein indirektes Verfahren, das bei neuartigen hocheffizienten Katalysatoren, wie sie z.B. für ULEV-Anforderungen gebraucht werden, an seine Grenzen stößt.

Beim mit Luftüberschuß betriebenen Verbrennungsmotor (z.B. sog. "Magermotor" oder Dieselmotor) entstehen prinzipbedingt viele Stickoxide. Ein mögliches Abgasreinigungskonzept sieht daher vor, in den Abgasstrang eines Kraftfahrzeuges einen Katalysator einzubringen, der eine gewisse Zeit lang Stickoxide speichern kann. Nach dieser "Speicherphase", in der der Katalysator mit der zu speichernden Abgaskomponente "gefüllt" wird, folgt eine Desorptionsphase, in welcher der Katalysator "geleert" wird (vergl. Strehlau W., Leyer J., Lox E.S., Kreuzer T., Hori M., Hoffmann M.: New developments in lean Nox catalysis for gasoline fueled passenger cars in Europe). Bei den zur Zeit gängigen Konzepten zur Erkennung des Katalysatorfüllgrades und der daran anschließenden Regelung des Kraftstoff/ Luft-Verhältnisses werden Gassensoren verwendet, die das zu speichernde Gas (NOx) hinter dem Katalysator messen. Ein Durchschlag des Gases hinter dem Katalysator zeigt in diesen Fällen an, daß der Katalysator mit dem zu speichernden Gas gefüllt ist und daß eine "Leerung" (sog. Desorptionsphase) eingeleitet werden muß. Patente und Veröffentlichungen über NOx-Sensoren existieren in großer Zahl (z.B. EP 0 257 842, US 5,466,350, DE 4308767 und Rao N., van den Bleek C.M., Schoonman J.: Potentiometric NOx (x=1,2) sensors with Ag⁺-β"alumina as solid electrolytes and Ag metal as solid reference. Solid State lonics 52 (1992) 339-346. Kato N., Nakagaki K., Ina N.: Thick Film ZrO2 NOx Sensor. SAE-Paper 960334 (1996). Somov S., Reinhardt G., Guth U., Göpel W.: Gas analysis with arraya of solid state electrochemical sensors: implications to monitor HCs an NOx in exhausts. Sensors an Actuators B 35-36 (1996) 409-418). Jedoch detektieren solche Sensoren nicht den Katalysatorfüllgrad, sondern den NOx-Gehalt des Abgases. Zudem weisen viele dieser Sensoren Stabilitäts-probleme auf und sind neben NOx auch auf Sauerstoff und/oder Wasser oder Kohlenmonoxid querempfindlich. Als weiterer Nachteil dieser Methode ist anzusehen, dass erst wenn der Durchbruch des Katalysators schon erfolgt ist, ein Signal an die Motorsteuerung zum "Ausräumen" abgegeben werden kann.

Ferner ist in der nichtvorveröffentlichten PCT-Anmeldung WO 98/10272 ein Sensor zur Überwachung eines NOx speichernden Katalysators offenbart. Der Sensor weist als sensitives Element das Speichermedium des Katalysators auf. Durch Messung einer sich mit dem Speichervorgang ändernden physikalischen Eigenschaft des Speichermediums wird der NOx-Beladungsgrades des Katalysators überwacht.

Um die beim Kaltstart entstehenden Kohlenwasserstoffe katalytisch zu verbrennen, reicht die Katalysatortemperatur nicht aus. Neben Lösungsansätzen, die ein elektrisches Vorheizen vorsehen (vergl. Otto E., Held W., Donnerstag A., Küper P.F., Pfalzgraf B., Wirth A.: Die Systementwicklung des elektrisch heizbaren Katalysators (E-Kat) für die LEV/ULEV und EU3 Gesetzgebung. MTZ 56 (9) (1995) 488ff), oder die eine sehr motornahe Plazierung eines Stirnwandkatalysators in Verbindung mit Sekundärlufteinblasung vorsehen (vergl. Albrecht F., Braun H.-S., Krauß M., Meisberger D.: BMW Sechszylindertechnik für TLEV- und OBD2-Anforderungen in den USA. MTZ 57(10) (1996)), werden auch kohlenwasserstoffspeichernde Systeme diskutiert, die bei Erreichen der Anspringtemperatur ihre gespeicherten Kohlenwasserstoffe wieder abgeben. Zur Diagnose solcher Systeme werden Kohlenwasserstoffsensoren benötigt, die jedoch ebenfalls Stabilitäts- und Querempfindlichkeitsprobleme aufweisen.

Aufgabe der Erfindung ist es, ein Verfahren zur Bestimmung des Füllgrades oder der Güte eines Gase speichernden Katalysators anzugeben, mit dem die beschriebenen Nachteile des Standes der Technik überwunden werden können.

Diese Aufgabe wird mit den Verfahren nach Patentanspruch 1 oder 10 gelöst. Vorteilhafte Ausführungen der Erfindung sind Gegenstand weiterer Ansprüche.

Erfindungsgemäß werden direkte Verfahren zur Katalysatorgüteerkennung bzw. zur Erkennung das Katalysatorfüllgrades vorgeschlagen, die die Umwandlung der Katalysatorbeschichtung (im folgenden wegen seiner Speichereigenschaft auch als Speichermedium bezeichnet) aufgrund einer chemischen Wechselwirkung des zu speichernden Gases (insbesondere Sauerstoff, Kohlenmonoxid, Stickoxide oder Kohlenwasserstoffe) mit der Beschichtung erkennen, und die dadurch die Katalysatorgüte bzw. den Katalysatorfüllstand detektieren.

Bei den chemischen Wechselwirkungen, welche beim "Speichern" bzw. beim "Leeren" auftreten, ändert sich abhängig vom Befüllungsgrad der chemische Zustand der Katalysatorbeschichtung des Monolithen, typischerweise bestehend aus Washcoat, Edelmetallen und speichernden Elementen. Beim Drei-Wege-Katalysator ändert sich mit der Verringerung der Konversionsrate und abnehmender Katalysatorgüte die Art und die Struktur der aktiven katalytischen Fläche. Mit diesen Änderungen der Beschichtung ändern sich auch die physikalischen Eigenschaften, wie z.B. die komplexe Dielektrizitätskonstante, die elektrische Leitfähigkeit, der Brechungsindex, etc.

Eine Detektion des Katalysatorfüllgrades und die Diagnose der Katalysatorgüte kann somit durch die Bestimmung solcher physikalischer Eigenschaften der Katalysatorbeschichtung erreicht werden, die sich mit dem Speichervorgang ändern. Die Detektion des Füllgrades oder der Güte ist durch die Kenntnis der komplexen elektrischen Impedanz Z, die auch den elektrischen Gleichstromwiderstand miteinschließt, beansprucht. Die komplexe elektrische Impedanz Z in diesem Sinne ist definiert als Summe aus dem Realteil Re(Z) und dem Imaginärteil Im(Z) der komplexen Impedanz Z. Die elektrische Impedanz Z ändert sich mit der angelegten Meßfrequenz. Typische Meßgrößen können sein: der Betrag der komplexen Impedanz |Z|, der Gleichstromwiderstand, die Kapazität, der Verlustfaktor oder die Verstimmung eines Schwingkreises. Weitere elektrische Meßgrößen, die Verwendung finden können, sind der Seebeckkoeffizient (auch Thermokraft genannt), oder der Temperaturgang der o.g. elektrischen Größen.

Als Frequenzbereich zur Messung der komplexen elektrischen Impedanz eignet sich der Bereich zwischen 0 Hz (Gleichspannung) und einer oberen Grenzfrequenz, bei der die der Meßfrequenz entsprechende Wellenlänge wesentlich kleiner als die Abmessungen der Meßanordnung ist. Vorzugsweise wird man eine geeignete Meßfrequenz auswählen und bei dieser Frequenz die komplexe Impedanz aus Realteil und Imaginärteil bestimmen, oder ein aus beiden oder einem dieser beiden Größen abgeleitetes Meßsignal aufnehmen.

Weitere nichtelektrische beispielhafte Meßgrößen, die Verwendung finden können und die nicht Teil der Erfindung sind, sind der optische Brechungsindex, der optische Absorptions- oder Reflexionskoeffizient oder die Massen- oder Volumenänderung.

Anstatt die physikalischen Eigenschaften des Speichermediums selbst zu messen, kann ein dem Speichermedium des Katalysators hinsichtlich seiner physikalischen Eigenschaften identisches oder ähnliches Medium separat vom Katalysator im Abgasstrom angeordnet werden, und die Veränderung der physikalischen Eigenschaften dieses identischen oder ähnlichen Mediums gemessen werden.

Beispielhafte Ausführungen der Erfindung werden im folgenden unter Bezugnahme auf die Fig. 1 bis 12 erläutert. Es zeigen:
- Fig.1 bis 7: Anordnungen zur Messung der komplexen Impedanz des Speichermediums;
- Fig.8,9: Anordnungen zur Messung der komplexen Impedanz eines dem Speichermedium des Katalysators hinsichtlich seiner physikalischen Eigenschaften identischen oder ähnlichen Mediums, das zusätzlich zum Katalysator vorhanden ist;
- Fig. 10: eine Anordnung zur Messung der Thermokraft des dem Speichermedium des Katalysators identischen oder ähnlichen Mediums;
- Fig. 11: Ein Meßdiagramm, aufgenommen mit einer Anordnung nach Fig.4;
- Fig. 12: eine Auswerteschaltung, zur Steuerung eines Regelkreises in Abhängigkeit von der zu messenden Impedanz des Speichermediums oder des identischen oder ähnlichen Mediums.

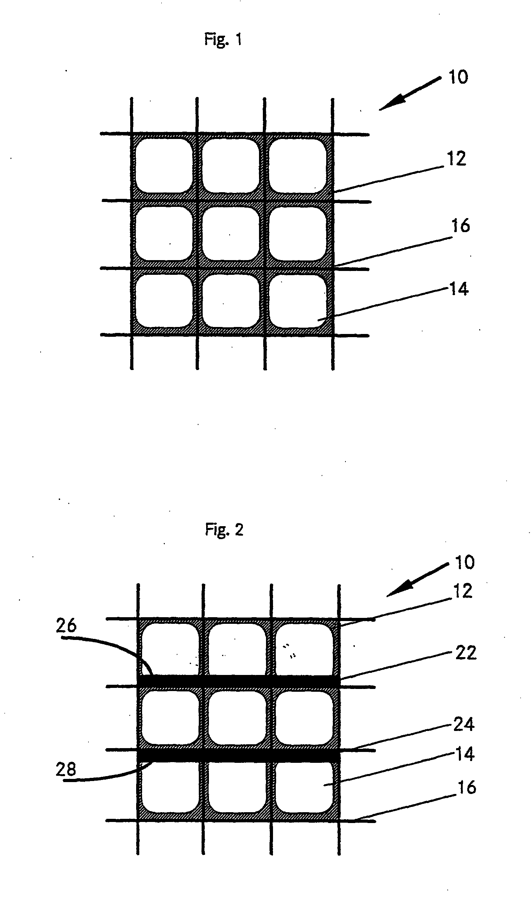

Fig.1 zeigt schematisch den Schnitt durch einen Katalysator 10, bei dem auf die Innenwände 16 einer mit Kanälen 14 versehenen Trägerstruktur eine spezielle Beschichtung 12 aufgebracht ist, die die Funktion des Katalysators bestimmt. Sie wird im folgenden auch als Speichermedium bezeichnet. Beispielhaft sei hier der Fall des NOx-Speicherkatalysators näher erläutert. Die Beschichtung besteht dann unter anderem aus einem katalytisch aktiven Edelmetall und aus BaCO₃ (vergl. Matsumoto S.: DeNOx Catalyst for automotive lean burn engine. Catalytic Science and Technology, 1 (1995) 39-42. Maxwell I.E., Lednor P.W.: Recent developments in materials science as applied to catalysis. Current Opinion in Solid State & Materials Science 1 (1996) 57-64). Im Motor entstehende Stickoxide (NOx, mit Hauptbestandteil NO) werden mit Hilfe des katalytisch aktiven Edelmetalls unter Sauerstoffaufnahme zu NO₂ oxidiert. NO₂ und BaCO₂ reagieren zu BaNO₃ und CO₂. Eine Speicherung kann höchstens solange erfolgen, bis das gesamte für NO zugängliche BaCO₃ zu BaNO₃ umgewandelt ist. Danach muß der Katalysator wieder ausgeräumt ("geleert") werden. Dies kann durch eine Reduktion erfolgen, wobei dann CO als Abgasbestandteil für die Rückumwandlung des BaNO₃ zu BaCO₃ verantwortlich ist.

Eine typische Meßanordnung, die die komplexe Impedanz des Speichermediums 12 messen kann, ist in Fig. 2 skizziert. Es werden zwei Elektroden 22 und 24, welche mit Zuleitungen 26 und 28 versehen sind, in den Katalysator so eingebracht, daß eine kapazitive Anordnung entsteht, deren elektrische Impedanz gemessen werden kann. Je nach gewünschter Größe der Impedanz, können sich die Elektroden über eine oder mehrere Zellen des Katalysators erstrecken. Die in die Zeichenebene hineingehenden Abmessungen der Elektroden 22,24 bestimmen ebenfalls die elektrische Impedanz Z. Es ist bei dieser - wie auch bei anderen denkbaren erfindungsgemäßen Anordnungen - darauf zu achten, daß das zwischen den Elektroden befindliche Beschichtungsmaterial 12 vom Abgas gut erreicht werden kann.

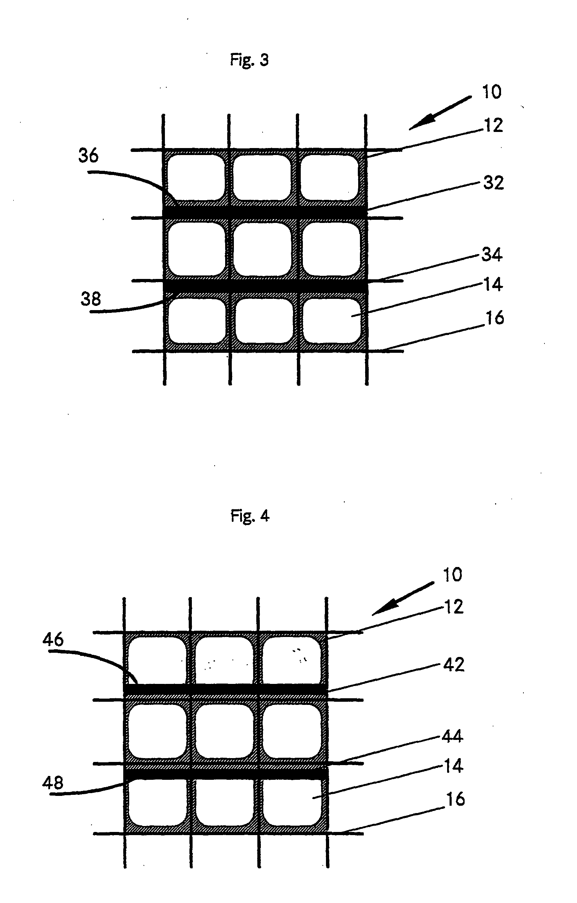

Eine weitere erfindungsgemäße Anordnung ist in Fig. 3 dargestellt. In diesem Fall sind die Elektroden 32 und 34 direkt auf den Innenwänden 16 angebracht. Auf den Elektroden befindet sich wie auf den anderen Innenwänden das Speichermedium 12.

In Fig. 4 ist eine weitere mögliche Ausführungsform dargestellt. Auf den Innenwänden 16 des Monolithen befindet sich das Speichermedium 12, auf dem wiederum Elektroden 42 und 44 aufgebracht wurden. Die Elektroden weisen in dieser Ausführungsform eine solche Porosität auf, daß sie gasdurchlässig sind. Andererseits muß aber noch ein elektrischer Durchgang vorhanden sein, was die Porosität begrenzt.

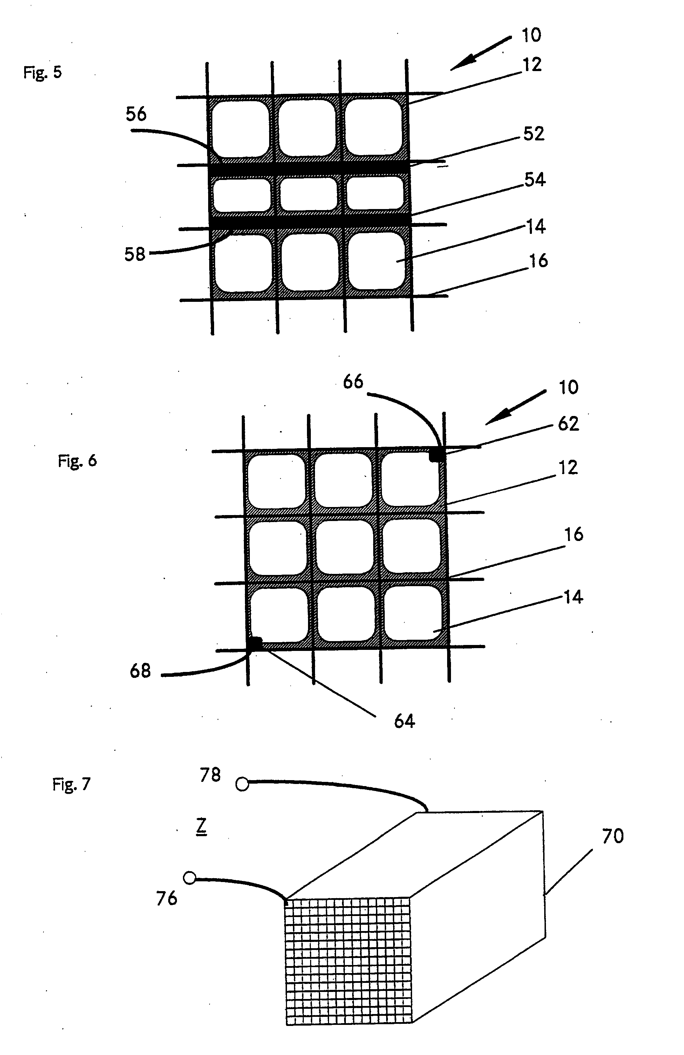

Eine weitere mögliche Ausführungsform ist in Fig. 5 dargestellt. Hierbei wird auf die Elektroden 52 und 54 das Speichermedium aufgebracht. Im Gegensatz zu den vorangegangenen Abbildungen wird dadurch die komplexe Impedanz der Innenwände 16 nicht mitgemessen.

Eine weitere mögliche Ausführungsform ist in Fig. 6 dargestellt. Die Elektroden 62 und 64 sind in die Zeichenebene hinein parallel zu den Kanälen 14 angeordnet. Die elektrische Impedanz wird an den Zuleitungen 66 und 68 gemessen. Die örtliche Anordnung der Elektroden 62 und 64 kann dem Anwendungsfall entsprechend angepaßt werden.

In Fig. 7 wird die Impedanz zwischen den Elektroden 76 und 78 über den gesamten Monolithen 70 gemessen. Die örtliche Anordnung der Elektroden kann ebenfalls dem Anwendungsfall entsprechend angepaßt werden.

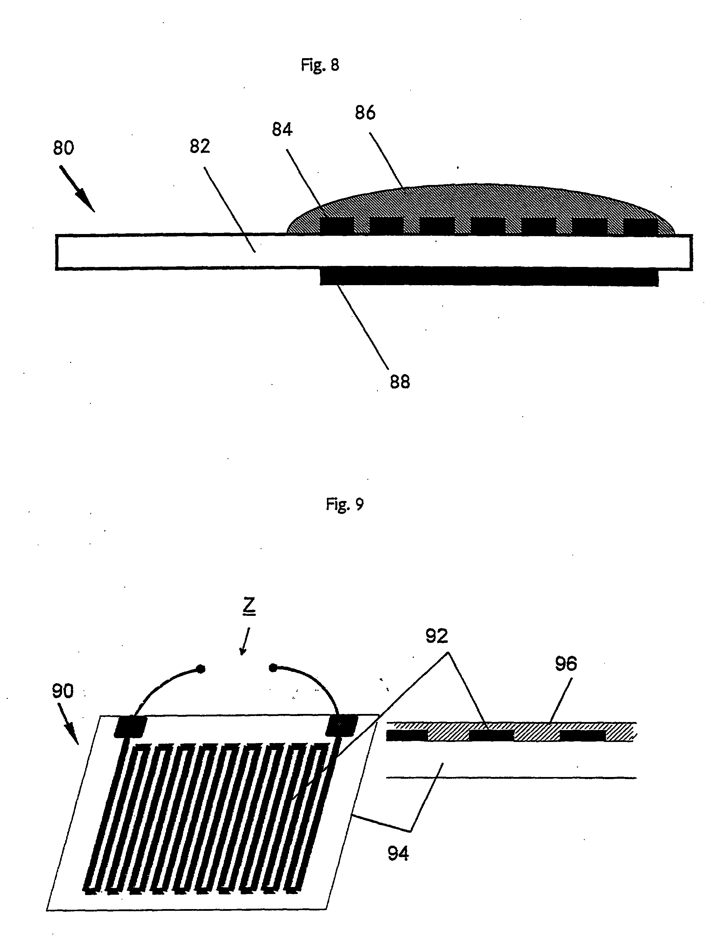

Fig. 8 zeigt die Schnittzeichnung einer beispielhaften Anordnung zur Messung der komplexen Impedanz eines dem Speichermedium des Katalysators hinsichtlich seiner physikalischen Eigenschaften identischen oder ähnlichen Mediums, das zusätzlich zum Katalysator im Abgasstrang vorhanden ist. Der grundsätzliche Aufbau gleicht den Anordnungen in der EP 0 426 989 oder US 5,143,696 oder in Plog C., Maunz W., Kurzweil P., Obermeier E., Scheibe C.: Combustion gas sensitivity of zeolite layers on thin-film capacitiors. Sensors and Actuators B 24-25 (1996) 403-406. Auf einen Transducer 80, bestehend aus Heizer 88 auf der Unterseite eines Substrates 82, - vorzugsweise aus Keramik, Quarz oder aus Silizium-, und geeigneter Elektrodenstruktur 84 (vorzugsweise in einer Inter-Digital-Struktur) auf der Oberseite des Substrates, wird eine Schicht 86 aufgebracht. Auf dem Transducer 80 angebrachte Leitungen erlauben es, die elektrische Impedanz zu messen. Die Anordnung wird in ein geeignetes Gehäuse eingebaut und so im Abgasstrang positioniert, daß die Schicht dem Abgas ausgesetzt ist. Im Gegensatz zu den obengenannten Literaturstellen besteht die Schicht 86 aus dem selben oder einem in seinen physikalisch-/chemischen Eigenschaften ähnlichen Material, wie die Beschichtung (Bezugsziffer 12 in den Fig. 1 bis 6) des ebenfalls im Abgas befindlichen Katalysators. Daher kann mit Hilfe einer derartigen Anordnung der Katalysatorfüllgrad oder die Katalysatorgüte detektiert werden.

Die elektrische Heizung 88 besteht z.B. aus 100nm bis 20µm dicken Bahnen aus Metall. Das Speichermedium 86 weist z.B. eine Schichtdecke zwischen 100nm und 1000µm auf. Die metallische Elektrodenstruktur 84 weist z.B. eine Schichtdicke von 100nm bis 20µm auf.

Fig. 9 zeigt eine Anordnung 90 mit einem elektrischen Leiter, der in diesem Fall als aufgebrachte, leitende Schicht 92 auf einem Trägersubstrat 94, das vorzugsweise aus Keramik, Quarz oder Silizium besteht, ausgeführt ist. Der elektrische Leiter 92 ist mit dem selben oder einem ähnlichen Material 96 beschichtet wie der Katalysatormonolith. Die elektrische Impedanz Z dieses mit Wechselstrom beaufschlagten elektrischen Leiters hängt von der ihn umgebenden Substanz ab. In dieser Ausführung ändert sich die als Dielektrikum wirkende Schicht 96 aufgrund der chemischen Wechselwirkung mit den Abgaskomponenten und zieht eine Änderung des Verlustwiderstandes sowie der komplexen elektrischen Impedanz Z nach sich.

Eine weitere, hier nicht gezeichnete Ausführungsform, kann der Aufbau eines Resonanzkreises mittels eines Hohleiters im Katalysator sein oder ein vom Katalysator getrennter Aufbau eines Resonanzkreises, in dem die selben oder ähnlichen Beschichtungsmaterialien, wie sie auch im Katalysator verwendet werden, eingebracht werden.

Eine weitere, hier ebenfalls nicht gezeichnete Ausführungsform, kann der Aufbau eines optischen Meßsystems sein, das die Reflexions- oder Absorptionsfähigkeit oder den optischen Brechungsindex des Speichermediums mißt. Dabei kann das Gase speichernde Material direkt im Katalysator oder in einem zusätzlichen Bauelement vorhanden sein.

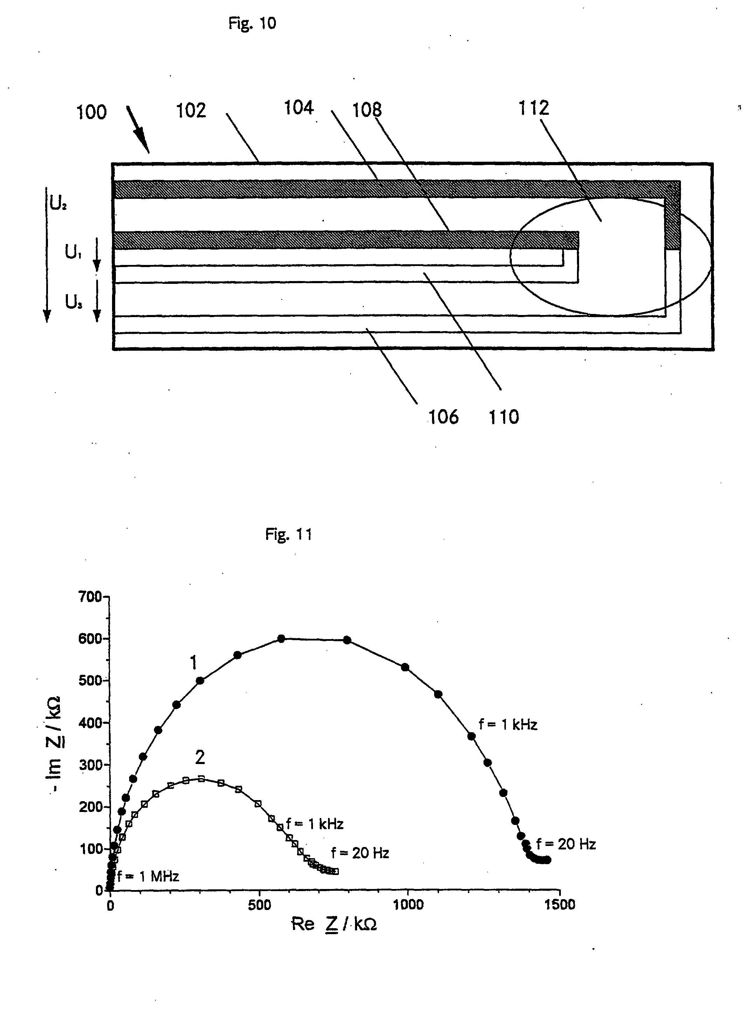

Die Aufsicht einer beispielhaften Anordnung, wie der Katalysatorfüllgrad oder die Katalysatorgüte mittels Thermokraftmessung detektiert werden kann, ist in Fig. 10 skizziert. Auf einen Transducer 100, bestehend aus Heizung (nicht dargestellt) auf der Unterseite eines Substrates 102, - vorzugsweise aus Keramik, Quarz oder aus Silizium -, und Thermoelementen 104-110 auf der Oberseite des Substrates, wird eine Schicht 112 aufgebracht. Die elektrische Heizung besteht z.B. aus 100nm bis 20µm dicken Bahnen aus Metall. Die metallischen Leiter 104 und 106 bzw. 108 und 110 sind an den Kontaktstellen elektrisch miteinander verbunden und bilden je ein Thermoelementpaar. Typische geeignete Materialkombinationen für die Thermoelementpaare sind NiCr/Ni oder Pf/PtRh. Auf dem Transducer 100 angebrachte Leitungen erlauben es, die Spannungen U₁ (Spannung zwischen 108 und 110) und U₂ (Spannung zwischen 104 und 106) zu messen. Die Anordnung wird in ein geeignetes Gehäuse eingebaut und so im Abgasstrang nach Katalysator positioniert, daß die Schicht 112 dem Abgas ausgesetzt ist. Die Schicht 112 besteht aus dem selben oder einem ähnlichen Material, wie die Beschichtung (Bezugsziffer 12 in Fig. 1 bis 6) des vorgeschalteten Katalysators. Die Heizerstruktur wird so ausgelegt, daß sich an den Kontaktstellen der beiden Thermoelementpaare unterschiedliche Temperaturen ergeben. Die Differenz der Spannungen U₁ und U₂ ist - sofern sich die Temperaturen an den Kontaktstellen nicht zu sehr unterscheiden - proportional zur Temperaturdifferenz ΔT an den Kontaktstellen. Der Proportionalitätsfaktor ergibt sich aus der gewählten Materialkombination. Die Spannung U₃ (Spannung zwischen 106 und 110) ist eine lineare Funktion der Temperaturdifferenz ΔT und der Thermokraft der Schicht 112, die ein Materialparameter ist. Daher kann auch mit Hilfe einer derartigen Anordnung der Katalysatorfüllgrad oder die Katalysatorgüte detektiert werden.

Fig. 11 zeigt ein typisches Meßergebnis, das mit einer der beschriebenen Meßanordnungen zur Impedanzmessung erhalten wurde. Kurve 1 (Symbol"•") gibt das Impedanzspektrum eines ausgeräumten Katalysators wieder, wohingegen Kurve 2 (Symbol "ʹ") das Impedanzspektrum eines mit NO beladenen Katalysator darstellt. Jedes Symbol gibt einen Meßwert, bestehend aus dem Realteil und dem Imaginärteil der komplexen Impedanz, aufgenommen bei einer bestimmten Meßfrequenz, wieder. Der Frequenzbereich betrug in diesem Falle 20 Hz bis 1 MHz. Bei konstanter Meßfrequenz ändern sich sowohl Realteil als auch Imaginärteil der Impedanz deutlich.

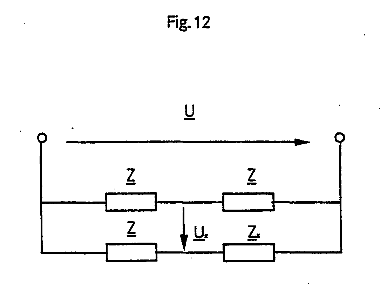

Beispielhaft ist in Fig. 12 eine einfache Auswerteschaltung, die ein geeignetes Spannungssignal zur Steuerung eines Regelkreises oder einer Auswerteeinheit (z.B. ein Motorsteuergerät) liefern kann, gezeigt. In einer Brückenschaltung, die von der Wechselspannung U gespeist wird und die aus drei komplexen Widerständen Z und der zu bestimmenden komplexen Impedanz Zₓ besteht, wird sich die Diagonalspannung Uₓ mit der der zu bestimmenden komplexen Impedanz Zₓ ändern. Das Signal der Diagonalspannung Uₓ kann direkt dem Regelgerät zugeführt werden.

Die Erfindung betrifft ein Verfahren zur Bestimmung des Füllgrades oder der Güte eines mittels eines Speichermediums Gase speichernden Katalysators.

Immer schärfere Abgasgesetze verbunden mit dem Druck zur Reduzierung des Kraftstoffverbrauches erfordern neue Konzepte sowohl für den Verbrennungsmotor als auch für die Abgasreinigung. Dies bedingt auch neue Konzepte für die Überwachung von Abgasreinigungsanlagen.

In Zusammenhang mit Katalysatoren, welche neben ihrer katalytischen Funktion zusätzlich auch Gase speichern, treten insbesondere die nachfolgend beschriebenen Probleme auf.

Beim stöchiometrisch betiebenen Ottomotor (sog. "λ=1-Motor") wird das Luft/Kraftstoffverhältnis λ des Rohabgases mit Hilfe einer ersten λ-Sonde detektiert. Je nach Regelabweichung vom Idealzustand λ=1 wird dann das Luft/Kraftstoffverhältnis etwas nachgeregelt. In der Praxis erhält man so eine λ-Schwingung des Rohabgases um den stöchiometrischen Punkt (λ=1). Im zeitlichen Mittel muß aber λ=1 eingehalten werden (vergl. Wiedenmann H.-M., Hötzel G., Riegel J., Weyl H.: ZrO₂-Lambda-Sonden für die Gemischregelung im Kraftfahrzeug. In: Schaumburg Hanno (Hrsg.): Sensoranwendungen, Teubner-Verlag, Stuttgart (1995) 371-399). Die Schwingungsfrequenz liegt im Bereich einiger zehntel Sekunden bis einiger Sekunden. Aufgrund der Sauerstoffspeicherfähigkeit des nach der ersten λ-Sonde angeordneten sog. "Drei-Wege-Katalysators" findet immer eine optimale Konversion statt, solange der Katalysator noch in gutem Zustand ist. Mit abnehmender Katalysatorgüte, d.h. die Konversionsrate verringert sich und die Anspringtemperatur steigt, nimmt auch die Fähigkeit, Sauerstoff zu speichern, ab. Eine zweite, nach dem Katalysator angeordnete λ-Sonde wird dann die Regelschwingung detektieren können. Eine Katalysätorgüteerkennung ist möglich, indem das Verhältnis der Amplituden der ersten und zweiten λ-Sonde ausgewertet wird. Bei diesem Verfahren (vergl. Glöckler O., Mezger M.: Eigendiagnose moderner Motorsteuerungssysteme - Entwicklungsstand und erste Erfahrungen mit OBD2 für USA. 38-52.) handelt es sich jedoch um ein indirektes Verfahren, das bei neuartigen hocheffizienten Katalysatoren, wie sie z.B. für ULEV-Anforderungen gebraucht werden, an seine Grenzen stößt.

Beim mit Luftüberschuß betriebenen Verbrennungsmotor (z.B. sog. "Magermotor" oder Dieselmotor) entstehen prinzipbedingt viele Stickoxide. Ein mögliches Abgasreinigungskonzept sieht daher vor, in den Abgasstrang eines Kraftfahrzeuges einen Katalysator einzubringen, der eine gewisse Zeit lang Stickoxide speichern kann. Nach dieser "Speicherphase", in der der Katalysator mit der zu speichernden Abgaskomponente "gefüllt" wird, folgt eine Desorptionsphase, in welcher der Katalysator "geleert" wird (vergl. Strehlau W., Leyer J., Lox E.S., Kreuzer T., Hori M., Hoffmann M.: New developments in lean Nox catalysis for gasoline fueled passenger cars in Europe). Bei den zur Zeit gängigen Konzepten zur Erkennung des Katalysatorfüllgrades und der daran anschließenden Regelung des Kraftstoff/ Luft-Verhältnisses werden Gassensoren verwendet, die das zu speichernde Gas (NOx) hinter dem Katalysator messen. Ein Durchschlag des Gases hinter dem Katalysator zeigt in diesen Fällen an, daß der Katalysator mit dem zu speichernden Gas gefüllt ist und daß eine "Leerung" (sog. Desorptionsphase) eingeleitet werden muß. Patente und Veröffentlichungen über NOx-Sensoren existieren in großer Zahl (z.B. EP 0 257 842, US 5,466,350, DE 4308767 und Rao N., van den Bleek C.M., Schoonman J.: Potentiometric NOx (x=1,2) sensors with Ag⁺-β"alumina as solid electrolytes and Ag metal as solid reference. Solid State lonics 52 (1992) 339-346. Kato N., Nakagaki K., Ina N.: Thick Film ZrO2 NOx Sensor. SAE-Paper 960334 (1996). Somov S., Reinhardt G., Guth U., Göpel W.: Gas analysis with arraya of solid state electrochemical sensors: implications to monitor HCs an NOx in exhausts. Sensors an Actuators B 35-36 (1996) 409-418). Jedoch detektieren solche Sensoren nicht den Katalysatorfüllgrad, sondern den NOx-Gehalt des Abgases. Zudem weisen viele dieser Sensoren Stabilitäts-probleme auf und sind neben NOx auch auf Sauerstoff und/oder Wasser oder Kohlenmonoxid querempfindlich. Als weiterer Nachteil dieser Methode ist anzusehen, dass erst wenn der Durchbruch des Katalysators schon erfolgt ist, ein Signal an die Motorsteuerung zum "Ausräumen" abgegeben werden kann.

Ferner ist in der US-Patentschrift US 5,497,099 ein Verfahren zur Bestimmung des Füllgrads eines Partikelfilters offenbart. Bei diesem Verfahren wird die Menge der im Partikelfilter angesammelten Ruß-Partikel über einen elektrischen Messeffekt ermittelt. Dieser besteht in der Dämpfung eines RF-Signals längs seines Ausbreitungsweges im Filter.

Um die beim Kaltstart entstehenden Kohlenwasserstoffe katalytisch zu verbrennen, reicht die Katalysatortemperatur nicht aus. Neben Lösungsansätzen, die ein elektrisches Vorheizen vorsehen (vergl. Otto E., Held W., Donnerstag A., Küper P.F., Pfalzgraf B., Wirth A.: Die Systementwicklung des elektrisch heizbaren Katalysators (E-Kat) für die LEV/ULEV und EU3 Gesetzgebung. MTZ 56 (9) (1995) 488ff), oder die eine sehr motornahe Plazierung eines Stirnwandkatalysators in Verbindung mit Sekundärlufteinblasung vorsehen (vergl. Albrecht F., Braun H.-S., Krauß M., Meisberger D.: BMW Sechszylindertechnik für TLEV- und OBD2-Anforderungen in den USA. MTZ 57(10) (1996)), werden auch kohlenwasserstoffspeichernde Systeme diskutiert, die bei Erreichen der Anspringtemperatur ihre gespeicherten Kohlenwasserstoffe wieder abgeben. Zur Diagnose solcher Systeme werden Kohlenwasserstoffsensoren benötigt, die jedoch ebenfalls Stabilitäts- und Querempfindlichkeitsprobleme aufweisen.

In der US-Patentschrift US 5,555,724 ist ein Verfahren zur Bestimmung des Füllgrads eines Gase speichernden Adsorbers beschrieben, welches ebenfalls auf der Erfassung von ausserhalb des Adsorbers auftretender Wirkungen beruht.

Aufgabe der Erfindung ist es, ein Verfahren zur Bestimmung des Füllgrades oder der Güte eines Gase speichernden Katalysators anzugeben, mit dem die beschriebenen Nachteile des Standes der Technik überwunden werden können.

Diese Aufgabe wird mit den Verfahren nach Patentanspruch 1 oder 10 gelöst. Vorteilhafte Ausführungen der Erfindung sind Gegenstand weiterer Ansprüche.

Erfindungsgemäß werden direkte Verfahren zur Katalysatorgüteerkennung bzw. zur Erkennung das Katalysatorfüllgrades vorgeschlagen, die die Umwandlung der Katalysatorbeschichtung (im folgenden wegen seiner Speichereigenschaft auch als Speichermedium bezeichnet) aufgrund einer chemischen Wechselwirkung des zu speichernden Gases (insbesondere Sauerstoff, Kohlenmonoxid, Stickoxide oder Kohlenwasserstoffe) mit der Beschichtung erkennen, und die dadurch die Katalysatorgüte bzw. den Katalysatorfüllstand detektieren.

Bei den chemischen Wechselwirkungen, welche beim "Speichern" bzw. beim "Leeren" auftreten, ändert sich abhängig vom Befüllungsgrad der chemische Zustand der Katalysatorbeschichtung des Monolithen, typischerweise bestehend aus Washcoat, Edelmetallen und speichernden Elementen. Beim Drei-Wege-Katalysator ändert sich mit der Verringerung der Konversionsrate und abnehmender Katalysatorgüte die Art und die Struktur der aktiven katalytischen Fläche. Mit diesen Änderungen der Beschichtung ändern sich auch die physikalischen Eigenschaften, wie z.B. die komplexe Dielektrizitätskonstante, die elektrische Leitfähigkeit, der Brechungsindex, etc.

Eine Detektion des Katalysatorfüllgrades und die Diagnose der Katalysatorgüte kann somit durch die Bestimmung solcher physikalischer Eigenschaften der Katalysatorbeschichtung erreicht werden, die sich mit dem Speichervorgang ändern. Insbesondere kann die Detektion des Füllgrades oder der Güte durch die Kenntnis der komplexen elektrischen Impedanz Z, die auch den elektrischen Gleichstromwiderstand miteinschließt, beansprucht werden. Die komplexe elektrische Impedanz Z in diesem Sinne ist definiert als Summe aus dem Realteil Re(Z) und dem Imaginärteil Im(Z) der komplexen Impedanz Z. Die elektrische Impedanz Z ändert sich mit der angelegten Meßfrequenz. Als Frequenzbereich zur Messung der komplexen elektrischen Impedanz eignet sich der Bereich zwischen 0 Hz (Gleichspan-nung) und einer oberen Grenzfrequenz, bei der die der Meßfrequenz entsprechende Wellenlänge wesentlich kleiner als die Abmessungen der Meßanordnung ist. Vorzugsweise wird man eine geeignete Meßfrequenz auswählen und bei dieser Frequenz die komplexe Impedanz aus Realteil und Imaginärteil bestimmen, oder ein aus beiden oder einem dieser beiden Größen abgeleitetes Meßsignal aufnehmen. Typische Meßgrößen können sein: der Betrag der komplexen Impedanz |Z|, der Gleichstromwiderstand, die Kapazität, der Verlustfaktor oder die Verstimmung eines Schwingkreises. Weitere elektrische Meßgrößen, die Verwendung finden können, sind der Seebeckkoeffizient (auch Thermokraft genannt), oder der Temperaturgang der o.g. elektrischen Größen.

Weitere nichtelektrische beispielhafte Meßgrößen, die Verwendung finden können, sind der optische Brechungsindex, der optische Absorptions- oder Reflexionskoeffizient oder die Massen- oder Volumenänderung.

Anstatt die physikalischen Eigenschaften des Speichermediums selbst zu messen, kann ein dem Speichermedium des Katalysators hinsichtlich seiner physikalischen Eigenschaften identisches oder ähnliches Medium separat vom Katalysator im Abgasstrom angeordnet werden, und die Veränderung der physikalischen Eigenschaften dieses identischen oder ähnlichen Mediums gemessen werden.

Beispielhafte Ausführungen der Erfindung werden im folgenden unter Bezugnahme auf die Fig. 1 bis 12 erläutert. Es zeigen:
- Fig.1 bis 7: Anordnungen zur Messung der komplexen Impedanz des Speichermediums;
- Fig.8,9: Anordnungen zur Messung der komplexen Impedanz eines dem Speichermedium des Katalysators hinsichtlich seiner physikalischen Eigenschaften identischen oder ähnlichen Mediums, das zusätzlich zum Katalysator vorhanden ist;
- Fig. 10: eine Anordnung zur Messung der Thermokraft des dem Speichermedium des Katalysators identischen oder ähnlichen Mediums;
- Fig. 11: Ein Meßdiagramm, aufgenommen mit einer Anordnung nach Fig.4;
- Fig. 12: eine Auswerteschaltung, zur Steuerung eines Regelkreises in Abhängigkeit von der zu messenden Impedanz des Speichermediums oder des identischen oder ähnlichen Mediums.

Fig.1 zeigt schematisch den Schnitt durch einen Katalysator 10, bei dem auf die Innenwände 16 einer mit Kanälen 14 versehenen Trägerstruktur eine spezielle Beschichtung 12 aufgebracht ist, die die Funktion des Katalysators bestimmt. Sie wird im folgenden auch als Speichermedium bezeichnet. Beispielhaft sei hier der Fall des NOx-Speicherkatalysators näher erläutert. Die Beschichtung besteht dann unter anderem aus einem katalytisch aktiven Edelmetall und aus BaCO₃ (vergl. Matsumoto S.: DeNOx Catalyst for automotive lean burn engine. Catalytic Science and Technology, 1 (1995) 39-42. Maxwell I.E., Lednor P.W.: Recent developments in materials science as applied to catalysis. Current Opinion in Solid State & Materials Science 1 (1996) 57-64). Im Motor entstehende Stickoxide (NOx, mit Hauptbestandteil NO) werden mit Hilfe des katalytisch aktiven Edelmetalls unter Sauerstoffaufnahme zu NO₂ oxidiert. NO₂ und BaCO₂ reagieren zu BaNO₃ und CO₂. Eine Speicherung kann höchstens solange erfolgen, bis das gesamte für NO zugängliche BaCO₃ zu BaNO₃ umgewandelt ist. Danach muß der Katalysator wieder ausgeräumt ("geleert") werden. Dies kann durch eine Reduktion erfolgen, wobei dann CO als Abgasbestandteil für die Rückumwandlung des BaNO₃ zu BaCO₃ verantwortlich ist.

Eine typische Meßanordnung, die die komplexe Impedanz des Speichermediums 12 messen kann, ist in Fig. 2 skizziert. Es werden zwei Elektroden 22 und 24, welche mit Zuleitungen 26 und 28 versehen sind, in den Katalysator so eingebracht, daß eine kapazitive Anordnung entsteht, deren elektrische Impedanz gemessen werden kann. Je nach gewünschter Größe der Impedanz, können sich die Elektroden über eine oder mehrere Zellen des Katalysators erstrecken. Die in die Zeichenebene hineingehenden Abmessungen der Elektroden 22,24 bestimmen ebenfalls die elektrische Impedanz Z. Es ist bei dieser - wie auch bei anderen denkbaren erfindungsgemäßen Anordnungen - darauf zu achten, daß das zwischen den Elektroden befindliche Beschichtungsmaterial 12 vom Abgas gut erreicht werden kann.

Eine weitere erfindungsgemäße Anordnung ist in Fig. 3 dargestellt. In diesem Fall sind die Elektroden 32 und 34 direkt auf den Innenwänden 16 angebracht. Auf den Elektroden befindet sich wie auf den anderen Innenwänden das Speichermedium 12.

In Fig. 4 ist eine weitere mögliche Ausführungsform dargestellt. Auf den Innenwänden 16 des Monolithen befindet sich das Speichermedium 12, auf dem wiederum Elektroden 42 und 44 aufgebracht wurden. Die Elektroden weisen in dieser Ausführungsform eine solche Porosität auf, daß sie gasdurchlässig sind. Andererseits muß aber noch ein elektrischer Durchgang vorhanden sein, was die Porosität begrenzt.

Eine weitere mögliche Ausführungsform ist in Fig. 5 dargestellt. Hierbei wird auf die Elektroden 52 und 54 das Speichermedium aufgebracht. Im Gegensatz zu den vorangegangenen Abbildungen wird dadurch die komplexe Impedanz der Innenwände 16 nicht mitgemessen.

Eine weitere mögliche Ausführungsform ist in Fig. 6 dargestellt. Die Elektroden 62 und 64 sind in die Zeichenebene hinein parallel zu den Kanälen 14 angeordnet. Die elektrische Impedanz wird an den Zuleitungen 66 und 68 gemessen. Die örtliche Anordnung der Elektroden 62 und 64 kann dem Anwendungsfall entsprechend angepaßt werden.

In Fig. 7 wird die Impedanz zwischen den Elektroden 76 und 78 über den gesamten Monolithen 70 gemessen. Die örtliche Anordnung der Elektroden kann ebenfalls dem Anwendungsfall entsprechend angepaßt werden.

Fig. 8 zeigt die Schnittzeichnung einer beispielhaften Anordnung zur Messung der komplexen Impedanz eines dem Speichermedium des Katalysators hinsichtlich seiner physikalischen Eigenschaften identischen oder ähnlichen Mediums, das zusätzlich zum Katalysator im Abgasstrang vorhanden ist. Der grundsätzliche Aufbau gleicht den Anordnungen in der EP 0 426 989 oder US 5,143,696 oder in Plog C., Maunz W., Kurzweil P., Obermeier E., Scheibe C.: Combustion gas sensitivity of zeolite layers on thin-film capacitiors. Sensors and Actuators B 24-25 (1996) 403-406. Auf einen Transducer 80, bestehend aus Heizer 88 auf der Unterseite eines Substrates 82, - vorzugsweise aus Keramik, Quarz oder aus Silizium-, und geeigneter Elektrodenstruktur 84 (vorzugsweise in einer Inter-Digital-Struktur) auf der Oberseite des Substrates, wird eine Schicht 86 aufgebracht. Auf dem Transducer 80 angebrachte Leitungen erlauben es, die elektrische Impedanz zu messen. Die Anordnung wird in ein geeignetes Gehäuse eingebaut und so im Abgasstrang positioniert, daß die Schicht dem Abgas ausgesetzt ist. Im Gegensatz zu den obengenannten Literaturstellen besteht die Schicht 86 aus dem selben oder einem in seinen physikalisch-/chemischen Eigenschaften ähnlichen Material, wie die Beschichtung (Bezugsziffer 12 in den Fig. 1 bis 6) des ebenfalls im Abgas befindlichen Katalysators. Daher kann mit Hilfe einer derartigen Anordnung der Katalysatorfüllgrad oder die Katalysatorgüte detektiert werden.

Die elektrische Heizung 88 besteht z.B. aus 100nm bis 20µm dicken Bahnen aus Metall. Das Speichermedium 86 weist z.B. eine Schichtdecke zwischen 100nm und 1000µm auf. Die metallische Elektrodenstruktur 84 weist z.B. eine Schichtdicke von 100nm bis 20µm auf.

Fig. 9 zeigt eine Anordnung 90 mit einem elektrischen Leiter, der in diesem Fall als aufgebrachte, leitende Schicht 92 auf einem Trägersubstrat 94, das vorzugsweise aus Keramik, Quarz oder Silizium besteht, ausgeführt ist. Der elektrische Leiter 92 ist mit dem selben oder einem ähnlichen Material 96 beschichtet wie der Katalysatormonolith. Die elektrische Impedanz Z dieses mit Wechselstrom beaufschlagten elektrischen Leiters hängt von der ihn umgebenden Substanz ab. In dieser Ausführung ändert sich die als Dielektrikum wirkende Schicht 96 aufgrund der chemischen Wechselwirkung mit den Abgaskomponenten und zieht eine Änderung des Verlustwiderstandes sowie der komplexen elektrischen Impedanz Z nach sich.

Eine weitere, hier nicht gezeichnete Ausführungsform, kann der Aufbau eines Resonanzkreises mittels eines Hohleiters im Katalysator sein oder ein vom Katalysator getrennter Aufbau eines Resonanzkreises, in dem die selben oder ähnlichen Beschichtungsmaterialien, wie sie auch im Katalysator verwendet werden, eingebracht werden.

Eine weitere, hier ebenfalls nicht gezeichnete Ausführungsform, kann der Aufbau eines optischen Meßsystems sein, das die Reflexions- oder Absorptionsfähigkeit oder den optischen Brechungsindex des Speichermediums mißt. Dabei kann das Gase speichernde Material direkt im Katalysator oder in einem zusätzlichen Bauelement vorhanden sein.

Die Aufsicht einer beispielhaften Anordnung, wie der Katalysatorfüllgrad oder die Katalysatorgüte mittels Thermokraftmessung detektiert werden kann, ist in Fig. 10 skizziert. Auf einen Transducer 100, bestehend aus Heizung (nicht dargestellt) auf der Unterseite eines Substrates 102, - vorzugsweise aus Keramik, Quarz oder aus Silizium -, und Thermoelementen 104-110 auf der Oberseite des Substrates, wird eine Schicht 112 aufgebracht. Die elektrische Heizung besteht z.B. aus 100nm bis 20µm dicken Bahnen aus Metall. Die metallischen Leiter 104 und 106 bzw. 108 und 110 sind an den Kontaktstellen elektrisch miteinander verbunden und bilden je ein Thermoelementpaar. Typische geeignete Materialkombinationen für die Thermoelementpaare sind NiCr/Ni oder Pf/PtRh. Auf dem Transducer 100 angebrachte Leitungen erlauben es, die Spannungen U₁ (Spannung zwischen 108 und 110) und U₂ (Spannung zwischen 104 und 106) zu messen. Die Anordnung wird in ein geeignetes Gehäuse eingebaut und so im Abgasstrang nach Katalysator positioniert, daß die Schicht 112 dem Abgas ausgesetzt ist. Die Schicht 112 besteht aus dem selben oder einem ähnlichen Material, wie die Beschichtung (Bezugsziffer 12 in Fig. 1 bis 6) des vorgeschalteten Katalysators. Die Heizerstruktur wird so ausgelegt, daß sich an den Kontaktstellen der beiden Thermoelementpaare unterschiedliche Temperaturen ergeben. Die Differenz der Spannungen U₁ und U₂ ist - sofern sich die Temperaturen an den Kontaktstellen nicht zu sehr unterscheiden - proportional zur Temperaturdifferenz ΔT an den Kontaktstellen. Der Proportionalitätsfaktor ergibt sich aus der gewählten Materialkombination. Die Spannung U₃ (Spannung zwischen 106 und 110) ist eine lineare Funktion der Temperaturdifferenz ΔT und der Thermokraft der Schicht 112, die ein Materialparameter ist. Daher kann auch mit Hilfe einer derartigen Anordnung der Katalysatorfüllgrad oder die Katalysatorgüte detektiert werden.

Fig. 11 zeigt ein typisches Meßergebnis, das mit einer der beschriebenen Meßanordnungen zur Impedanzmessung erhalten wurde. Kurve 1 (Symbol"•") gibt das Impedanzspektrum eines ausgeräumten Katalysators wieder, wohingegen Kurve 2 (Symbol "ʹ") das Impedanzspektrum eines mit NO beladenen Katalysator darstellt. Jedes Symbol gibt einen Meßwert, bestehend aus dem Realteil und dem Imaginärteil der komplexen Impedanz, aufgenommen bei einer bestimmten Meßfrequenz, wieder. Der Frequenzbereich betrug in diesem Falle 20 Hz bis 1 MHz. Bei konstanter Meßfrequenz ändern sich sowohl Realteil als auch Imaginärteil der Impedanz deutlich.

Beispielhaft ist in Fig. 12 eine einfache Auswerteschaltung, die ein geeignetes Spannungssignal zur Steuerung eines Regelkreises oder einer Auswerteeinheit (z.B. ein Motorsteuergerät) liefern kann, gezeigt. In einer Brückenschaltung, die von der Wechselspannung U gespeist wird und die aus drei komplexen Widerständen Z und der zu bestimmenden komplexen Impedanz Zₓ besteht, wird sich die Diagonalspannung Uₓ mit der der zu bestimmenden komplexen Impedanz Zₓ ändern. Das Signal der Diagonalspannung Uₓ kann direkt dem Regelgerät zugeführt werden.

## Patentansprüche (Patentansprüche für folgende(n) Vertragsstaat(en): DE, ES, FR, GB, IT, SE)

1. Verfahren zur Bestimmung des Füllgrads oder der Güte eines mittels eines Speichermediums (12) Gase speichernden Katalysators (10), durch Messung der Änderung mindestens einer physikalischen Eigenschaft, insbesondere einer elektrischen oder elektromagnetischen Eigenschaft, des mit dem Speichervorgang sich verändernden Speichermediums (12), und wobei,
die Änderung der komplexen elektrischen Impedanz oder die Änderung der Thermokraft gemessen wird.

2. Verfahren nach Anspruch 1,
**dadurch gekennzeichnet, dass**
die Messung der komplexen elektrischen Impedanz bei einer oder mehreren Frequenzen aus dem Frequenzbereich zwischen 0 Hz, d.h. Gleichspannung, und einer oberen Grenzfrequenz, bei der die der Messfrequenz entsprechende Wellenlänge wesentlich kleiner als die Abmessungen der Messanordnung ist, erfolgt.

3. Verfahren nach Anspruch 1 oder 2,
**dadurch gekennzeichnet, dass**
die komplexe elektrische Impedanz mittels einer mindestens zwei Elektroden (22, 24, 32, 34, 42, 44, 52, 54, 62, 64, 76, 78) aufweisenden elektrischen Vorrichtung gemessen wird, wobei sich zwischen den Elektroden (22, 24, 32, 34, 42, 44, 52, 54, 62, 64, 76, 78) vom Abgas erreichbares Speichermedium (12) befindet.

4. Verfahren nach einem der vorangehenden Ansprüche,
**dadurch gekennzeichnet, dass**
der Katalysator (10) eine mit Kanälen (14) versehene monolithische Trägerstruktur umfasst, auf der das Speichermedium (12) schichtartig aufgebracht wird.

5. Verfahren nach Anspruch 3 und 4,
**dadurch gekennzeichnet, dass**
die Elektroden (22, 24, 32, 34, 52, 54) auf einer Innenwand (16) der Trägerstruktur angeordnet werden.

6. Verfahren nach Anspruch 3 und 4,
**dadurch gekennzeichnet, dass**
die Elektroden (52, 54) auf einer Innenwand (16) der Trägerstruktur angeordnet werden und dass auf die Elektroden (52, 54) das Speichermedium (12) schichtartig aufgebracht wird.

7. Verfahren nach Anspruch 3 und 4,
**dadurch gekennzeichnet, dass**
das Speichermedium (12) schichtartig auf die Innenwände (16) der Trägerstruktur aufgebracht wird, und dass auf das Speichermedium (12) die Elektroden (42, 44) angeordnet werden.

8. Verfahren nach einem der Ansprüche 4 bis 7,
**dadurch gekennzeichnet, dass**
die Elektroden (22, 24, 32,34, 42, 44, 52, 54, 62, 64) bezüglich der Trägerstruktur in axialer oder in radialer Richtung angeordnet werden.

9. Verfahren nach Anspruch 1,
**dadurch gekennzeichnet, dass**
die Thermokraft mittels einer mindestens zwei Thermoelementpaare (104, 106, 108, 110) umfassenden Vorrichtung gemessen wird.

10. Verfahren zur Bestimmung des Füllgrads oder der Güte eines mittels eines Speichermediums (12) Gase speichernden Katalysators (10), wobei ein dem Speichermedium (12) des Katalysators (10) hinsichtlich seiner physikalischen Eigenschaften, insbesondere seiner elektrischen oder elektromagnetischen Eigenschaften, identisches oder ähnliches Medium (86, 96) zusätzlich zum Katalysator (10) im Abgasstrom angeordnet wird, durch Messung der Änderung mindestens einer physikalischen Eigenschaft, insbesondere einer elektrischen oder elektromagnetischen Eigenschaft, des mit dem Speichervorgang sich verändernden identischen oder ähnlichen Mediums (86, 96),
und wobei,
die Änderung der komplexen elektrischen Impedanz des Mediums (86, 96) oder die Änderung der Thermokraft des Mediums (86, 96) gemessen wird.

11. Verfahren nach Anspruch 10,
**dadurch gekennzeichnet, dass**
die Messung der komplexen elektrischen Impedanz bei einer oder mehreren Frequenzen aus dem Frequenzbereich zwischen 0 Hz, d.h. Gleichspannung, und einer oberen Grenzfrequenz, bei der die der Messfrequenz entsprechende Wellenlänge wesentlich kleiner als die Abmessungen der Messanordnung ist, erfolgt.

12. Verfahren nach Anspruch 10 oder 11,
**dadurch gekennzeichnet, dass**
die komplexe elektrische Impedanz mittels einer Anordnung gemessen wird, wobei die Anordnung ein Substrat (82, 94) umfasst, auf dessen einer Flachseite eine Leiter- oder Elektrodenstruktur (84, 92) aufgebracht ist, und auf dessen anderer Flachseite eine elektrische Heizung (88) aufgebracht ist, wobei auf der mit einer Leiter- oder Elektrodenstruktur (84, 92) versehenen Flachseite das Medium (86, 96) aufgebracht ist.

13. Verfahren nach Anspruch 12,
**dadurch gekennzeichnet, dass**
das Substrat (82, 94) aus Silizium, Quarz oder einer Keramik besteht, und die elektrische Heizung (88) 100 nm bis 50 µm dicke Bahnen aus Metall aufweist, und die Leiter- oder Elektrodenstruktur (84, 92) aus Metall besteht und eine Schichtdicke zwischen 100 nm und 1000 µm aufweist.

14. Verfahren nach Anspruch 10,
**dadurch gekennzeichnet, dass**
die Thermokraft mittels einer Anordnung gemessen wird, wobei die Anordnung ein Substrat (102) umfasst, auf dessen einer Flachseite eine elektrische Heizung aufgebracht ist, und auf dessen anderer Flachseite das Medium (112) sowie mindestens zwei Thermopaare (104, 106, 108, 110) aufgebracht sind.

15. Verfahren nach Anspruch 14,
**dadurch gekennzeichnet, dass**
das Substrat (102) aus Silizium, Quarz oder einer Keramik besteht, und die elektrische Heizung 100 nm bis 50 µm dicke Bahnen aus Metall aufweist.

16. Verfahren nach einem der vorangehenden Ansprüche,
**dadurch gekennzeichnet, dass**
der Katalysator (10) für Abgasreinigungszwecke in einem Kraftfahrzeug eingesetzt werden kann.

17. Verfahren nach einem der vorangehenden Ansprüche,
**dadurch gekennzeichnet, dass**
der Katalysator (10) eine oder mehrere der Abgaskomponenten Stickoxide, Kohlenmonoxid, Kohlenwasserstoffe oder Sauerstoff speichern kann.

## Patentansprüche (Patentansprüche für folgende(n) Vertragsstaat(en): AT, BE, CH/LI, IE)

1. Verfahren zur Bestimmung des Füllgrads oder der Güte eines mittels eines Speichermediums (12) Gase speichernden Katalysators (10),
**dadurch gekennzeichnet, dass**
die durch chemische Wechselwirkung zwischen dem Speichermedium und dem eingespeicherten Gas mit dem Speichervorgang eintretende Änderung mindestens einer physikalischen Eigenschaft des Speichermediums (12) gemessen wird und anhand der Messergebnisse der Füllgrad oder die Güte des Katalysators (10) bestimmt wird.

2. Verfahren nach Anspruch 1,
**dadurch gekennzeichnet, dass**
die Änderung der komplexen elektrischen Impedanz gemessen wird.

3. Verfahren nach Anspruch 2,
**dadurch gekennzeichnet, dass**
die Messung der komplexen elektrischen Impedanz bei einer oder mehreren Frequenzen aus dem Frequenzbereich zwischen 0 Hz, d.h. Gleichspannung, und einer oberen Grenzfrequenz, bei der die der Messfrequenz entsprechende Wellenlänge wesentlich kleiner als die Abmessungen der Messanordnung ist, erfolgt.

4. Verfahren nach einem der Ansprüche 1 bis 3,
**dadurch gekennzeichnet, dass**
die komplexe elektrische Impedanz mittels einer mindestens zwei Elektroden (22, 24, 32, 34, 42, 44, 52, 54, 62, 64, 76, 78) aufweisenden elektrischen Vorrichtung gemessen wird, wobei sich zwischen den Elektroden (22, 24, 32, 34, 42, 44, 52, 54, 62, 64, 76, 78) vom Abgas erreichbares Speichermedium (12) befindet.

5. Verfahren nach einem der vorangehenden Ansprüche,
**dadurch gekennzeichnet, dass**
der Katalysator (10) eine mit Kanälen (14) versehene monolithische Trägerstruktur umfasst, auf der das Speichermedium (12) schichtartig aufgebracht wird.

6. Verfahren nach Anspruch 4 und 5,
**dadurch gekennzeichnet, dass**
die Elektroden (22, 24, 32, 34, 52, 54) auf einer Innenwand (16) der Trägerstruktur angeordnet werden.

7. Verfahren nach Anspruch 4 und 5,
**dadurch gekennzeichnet, dass**
die Elektroden (52, 54) auf einer Innenwand (16) der Trägerstruktur angeordnet werden und dass auf die Elektroden (52, 54) das Speichermedium (12) schichtartig aufgebracht wird.

8. Verfahren nach Anspruch 4 und 5,
**dadurch gekennzeichnet, dass**
das Speichermedium (12) schichtartig auf die Innenwände (16) der Trägerstruktur aufgebracht wird, und dass auf das Speichermedium (12) die Elektroden (42, 44) angeordnet werden.

9. Verfahren nach einem der Ansprüche 5 bis 8,
**dadurch gekennzeichnet, dass**
die Elektroden (22, 24, 32,34, 42, 44, 52, 54, 62, 64) bezüglich der Trägerstruktur in axialer oder in radialer Richtung angeordnet werden.

10. Verfahren nach Anspruch 1,
**dadurch gekennzeichnet, dass**
die Änderung der. Thermokraft gemessen wird.

11. Verfahren nach Anspruch 10,
**dadurch gekennzeichnet, dass**
die Thermokraft mittels einer mindestens zwei Thermoelementpaare (104, 106, 108, 110) umfassenden Vorrichtung gemessen wird.

12. Verfahren nach Anspruch 1,
**dadurch gekennzeichnet, dass**
die Änderung des optischen Brechungsindex oder des optischen Absorptions- oder Reflexionskoeffizienten gemessen wird.

13. Verfahren nach Anspruch 1,
**dadurch gekennzeichnet, dass**
die Massen- oder Volumenänderung gemessen wird.

14. Verfahren zur Bestimmung des Füllgrads oder der Güte eines mittels eines Speichermediums (12) Gase speichernden Katalysators (10),
**dadurch gekennzeichnet, dass**
ein dem Speichermedium (12) des Katalysators (10) hinsichtlich seiner physikalischen Eigenschaften, identisches oder ähnliches Medium (86, 96) zusätzlich zum Katalysator (10) im Abgasstrom angeordnet wird, und die Änderung mindestens einer physikalischen Eigenschaft, des mit dem Speichervorgang sich verändernden identischen oder ähnlichen Mediums (86, 96) gemessen und anhand dieser Ergebnisse der Füllgrad oder die Güte des Katalysators (10) bestimmt wird.

15. Verfahren nach Anspruch 14,
**dadurch gekennzeichnet, dass**
die Änderung der komplexen elektrischen Impedanz des Mediums (86, 96) gemessen wird.

16. Verfahren nach Anspruch 15,
**dadurch gekennzeichnet, dass**
die Messung der komplexen elektrischen Impedanz bei einer oder mehreren Frequenzen aus dem Frequenzbereich zwischen 0 Hz, d.h. Gleichspannung, und einer oberen Grenzfrequenz, bei der die der Messfrequenz entsprechende Wellenlänge wesentlich kleiner als die Abmessungen der Messanordnung ist, erfolgt.

17. Verfahren nach einem der Ansprüch 14 bis 16,
**dadurch gekennzeichnet, dass**
die komplexe elektrische Impedanz mittels einer Anordnung gemessen wird, wobei die Anordnung ein Substrat (82, 94) umfasst, auf dessen einer Flachseite eine Leiter- oder Elektrodenstruktur (84, 92) aufgebracht ist, und auf dessen anderer Flachseite eine elektrische Heizung (88) aufgebracht ist, wobei auf der mit einer Leiter- oder Elektrodenstruktur (84, 92) versehenen Flachseite das Medium (86, 96) aufgebracht ist.

18. Verfahren nach Anspruch 17,
**dadurch gekennzeichnet, dass**
das Substrat (82, 94) aus Silizium, Quarz oder einer Keramik besteht, und die elektrische Heizung (88) 100 nm bis 50 um dicke Bahnen aus Metall aufweist, und die Leiter- oder Elektrodenstruktur (84, 92) aus Metall besteht und eine Schichtdicke zwischen 100 nm und 1000 um aufweist.

19. Verfahren nach Anspruch 14,
**dadurch gekennzeichnet, dass**
die Änderung der Thermokraft des Mediums gemessen wird.

20. Verfahren nach Anspruch 19,
**dadurch gekennzeichnet, dass**
die Thermokraft mittels einer Anordnung gemessen wird, wobei die Anordnung ein Substrat (102) umfasst, auf dessen einer Flachseite eine elektrische Heizung aufgebracht ist, und auf dessen anderer Flachseite das Medium (112) sowie mindestens zwei Thermopaare (104, 106, 108, 110) aufgebracht sind.

21. Verfahren nach Anspruch 20,
**dadurch gekennzeichnet, dass**
das Substrat (102) aus Silizium, Quarz oder einer Keramik besteht, und die elektrische Heizung 100 nm bis 50 µm dicke Bahnen aus Metall aufweist.

22. Verfahren nach Anspruch 14,
**dadurch gekennzeichnet, dass**
die Änderung des optischen Brechungsindex oder des optischen Absorptions- oder Reflexionskoeffizienten des Mediums gemessen wird.

23. Verfahren nach Anspruch 14,
**dadurch gekennzeichnet, dass**
die Massen- oder Volumenänderung gemessen wird.

24. Verfahren nach einem der vorangehenden Ansprüche,
**dadurch gekennzeichnet, dass**
der Katalysator (10) für Abgasreinigungszwecke in einem Kraftfahrzeug eingesetzt werden kann.

25. Verfahren nach einem der vorangehenden Ansprüche,
**dadurch gekennzeichnet, dass**
der Katalysator (10) eine oder mehrere der Abgaskomponenten Stickoxide, Kohlenmonoxid, Kohlenwasserstoffe oder Sauerstoff speichern kann.

## Claims (Claims for the following Contracting State(s): DE, ES, FR, GB, IT, SE)

1. A process for determining the level or the quality of a catalyst (10) which stores gases by means of a storage medium (12) by measuring the change in at least one physical property, in particular an electrical or electromagnetic property of the storage medium (12) as it changes with the storage process,
the change in complex electrical impedance or the change in thermal electromotive force being measured.

2. A process in accordance with claim 1,
**characterised in that**
the complex electrical impedance is measured at one or more frequencies in the frequency range between 0 Hz, i.e. d.c. voltage, and an upper frequency limit at which the wavelength corresponding to the measuring frequency is considerably smaller than the dimensions of the measuring arrangement.

3. A process in accordance with claim 1 or 2,
**characterised in that**
the complex electrical impedance is measured using an electrical device having at least two electrodes (22, 24, 32, 34, 42, 44, 52, 54, 62, 64, 76, 78), storage medium (12) accessible to the exhaust gas being located between the electrodes (22, 24, 32, 34, 42, 44, 52, 54, 62, 64, 76, 78).

4. A process in accordance with one of the preceding claims,
**characterised in that**
the catalyst (10) comprises a monolithic carrier structure provided with channels (14) to which the storage medium (12) is applied in layers.

5. A process in accordance with claims 3 and 4,
**characterised in that**
the electrodes (22, 24, 32, 34, 52, 54) are positioned on an internal wall (16) of the carrier structure.

6. A process in accordance with claims 3 and 4,
**characterised in that**
the electrodes (52, 54) are positioned on an internal wall (16) of the carrier structure and the storage medium (12) is applied to the electrodes (52, 54) in a layer.

7. A process in accordance with claims 3 and 4,
**characterised in that**
the storage medium (12) is applied to the internal walls (6) of the carrier structure in a layer and the electrodes (42, 44) are positioned on the storage medium (12).

8. A process in accordance with one of claims 4 to 7,
**characterised in that**
the electrodes (22, 24, 32, 34, 42, 44, 52, 54, 62, 64) are positioned axially or radially in relation to the carrier structure.

9. A process in accordance with claim 1,
**characterised in that**
the thermal electromotive force is measured by means of a device comprising at least two thermocouples (104, 106, 108, 110).

10. A process for determining the level or the quality of a catalyst (10) which stores gases by means of a storage medium (12), a medium (86, 96) identical or similar in terms of its physical properties, in particular its electrical or electromagnetic properties, to the storage medium (12) in the catalyst (10) also being placed in the exhaust train in addition to the catalyst (10), by measuring the change in at least one physical property, in particular an electrical or electromagnetic property, of the medium (86, 96) identical or similar over the storage process, either the change in the complex electrical impedance of the medium (86, 96) or the change in the thermal electromotive force of the medium (86, 96) being measured.

11. A process in accordance with claim 10,
**characterised in that**
the complex electrical impedance is measured at one or more frequencies in the frequency range between 0 Hz, i.e. d.c. voltage, and an upper limit frequency at which the wavelength corresponding to the measuring frequency is significantly smaller than the dimensions of the measuring arrangement.

12. A process in accordance with claim 10 or 11,
**characterised in that**
the complex electrical impedance is measured by means of an arrangement, the arrangement comprising a substrate (82, 94) onto one flat side of which is applied a conductor or electrode structure (84, 92) and onto the other flat side of which is applied an electrical heating device (88), the medium (86, 96) being applied to the flat side provided with the conductor or electrode structure (84, 92).

13. A process in accordance with claim 12,
**characterised in that**
the substrate (82, 94) consists of silicon, quartz or a ceramic and the electrical heating device (88) has 100 nm to 50 µm thick strips of metal and the conductor or electrode structure (84, 92) consists of metal and has a layer thickness of between 100 nm and 1000 µm.

14. A process in accordance with claim 10,
**characterised in that**
the thermal electromotive force is measured by means of an arrangement, the arrangement comprising a substrate (102) onto the flat side of which is applied an electrical heating device and onto the other flat side of which are applied the medium (112) and at least two thermocouples (104, 106, 108, 110).

15. A process in accordance with claim 14,
**characterised in that**
the substrate (102) consists of silicon, quartz or a ceramic and the electrical heating device has 100 nm to 50 µm thick strips of metal.

16. A process in accordance with one of the preceding claims,
**characterised in that**
the catalyst (10) can be used in a motor vehicle for the purposes of controlling exhaust emissions.

17. A process in accordance with one of the preceding claims,
**characterised in that**
the catalyst (10) is able to store one or more of the following exhaust emission components: nitrogen oxide, carbon monoxide, hydrocarbons or oxygen.

## Claims (Claims for the following Contracting State(s): AT, BE, CH/LI, IE)

1. A process for determining the level or the quality of a catalyst (10) which stores gases by means of a storage medium (12),
**characterised in that**
the change in at least one physical property of the storage medium (12) occurring due to chemical interaction between the storage medium and the stored gas during the storage process is measured and the level or the quality of the catalyst (10) is determined using the results of this measurement.

2. A process in accordance with claim 1,
**characterised in that**
the change in complex electrical impedance is measured.

3. A process in accordance with claim 2,
**characterised in that**
the complex electrical impedance is measured at one or more frequencies in the frequency range between 0 Hz, i.e. d.c. voltage, and an upper limit frequency at which the wavelength corresponding to the measuring frequency is significantly smaller than the dimensions of the measuring arrangement.

4. A process in accordance with claim 1 or 3,
**characterised in that**
the complex electrical impedance is measured using an electrical device having at least two electrodes (22, 24, 32, 34, 42, 44, 52, 54, 62, 64, 76, 78), storage medium (12) accessible to the exhaust gas being located between the electrodes (22, 24, 32, 34, 42, 44, 52, 54, 62, 64, 76, 78).

5. A process in accordance with one of the preceding claims,
**characterised in that**
the catalyst (10) comprises a monolithic carrier structure provided with channels (14) on to which the storage medium (12) is applied in layers.

6. A process in accordance with claims 4 and 5,
**characterised in that**
the electrodes (22, 24, 32, 34, 52, 54) are positioned on an internal wall (16) of the carrier structure.

7. A process in accordance with claims 4 and 5,
**characterised in that**
the electrodes (52, 54) are positioned on an internal wall (16) of the carrier structure and the storage medium (12) is applied to the electrodes (52, 54) in a layer.

8. A process in accordance with claims 4 and 5,
**characterised in that**
the storage medium (12) is applied to the internal walls (6) of the carrier structure in a layer and the electrodes (42, 44) are positioned on the storage medium (12).

9. A process in accordance with one of claims 5 to 8,
**characterised in that**
the electrodes (22, 24, 32, 34, 42, 44, 52, 54, 62, 64) are positioned axially or radially in relation to the carrier structure.

10. A process in accordance with claim 1,
**characterised in that**
the change in thermal electromotive force is measured.

11. A process in accordance with claim 10,
**characterised in that**
the thermal electromotive force is measured by means of a device comprising at least two thermocouples (104, 106, 108, 110).

12. A process in accordance with claim 1,
**characterised in that**
the change in the optical refractive index or the optical adsorption or reflexion coefficients is measured.

13. A process in accordance with claim 1,
**characterised in that**
changes in mass or volume are measured.

14. A process for determining the level or the quality of a catalyst (10) which stores gases by means of a storage medium (12),
**characterised in that**
a medium (86, 96) identical or similar in terms of its physical properties to the storage medium (12) in the catalyst (10) is placed in the exhaust gas flow in addition to the catalyst (10), and the change in at least one physical property of the identical or similar medium (86, 96) which changes over the storage process is measured and the level or quality of the catalyst (10) is determined using these results.

15. A process in accordance with claim 14,
**characterised in that**
the change in complex electrical impedance of the medium (86, 96) is measured.

16. A process in accordance with claim 15,
**characterised in that**
the complex electrical impedance is measured at one or more frequencies in the frequency range between 0 Hz, i.e. d.c. voltage, and an upper limit frequency at which the wavelength corresponding to the measuring frequency is significantly smaller than the dimensions of the measuring arrangement.

17. A process in accordance with claim 14 to 16,
**characterised in that**
the complex electrical impedance is measured by means of an arrangement, the arrangement comprising a substrate (82, 94) onto one flat side of which is applied a conductor or electrode structure (84, 92) and onto the other flat side of which is applied an electrical heating device (88), the medium (86, 96) being applied to the flat side provided with the conductor or electrode structure (84, 92).

18. A process in accordance with claim 17,
**characterised in that**
the substrate (82, 94) consists of silicon, quartz or a ceramic and the electrical heating device (88) has 100 nm to 50 µm thick strips of metal and the conductor or electrode structure (84, 92) consists of metal and has a layer thickness of between 100 nm and 1000 µm.

19. A process in accordance with claim 14,
**characterised in that**
the change in the thermal electromotive force of the medium is measured.

20. A process in accordance with claim 19,
**characterised in that**
the thermal electromotive force is measured by means of an arrangement, the arrangement comprising a substrate (102) onto the flat side of which is applied an electrical heating device and onto the other flat side of which are applied the medium (112) and at least two thermocouples (104, 106, 108, 110).

21. A process in accordance with claim 20,
**characterised in that**
the substrate (102) consists of silicon, quartz or a ceramic and the electrical heating device has 100 nm to 50 µm thick strips of metal.

22. A process in accordance with claim 14,
**characterised in that**
the change in the optical refractive index or the optical adsorption or reflection coefficients of the medium are measured.

23. A process in accordance with claim 14,
**characterised in that**
changes in the mass or volume are measured.

24. A process in accordance with one of the preceding claims,
**characterised in that**
the catalyst (10) can be used in a motor vehicle for the purposes of controlling exhaust emissions.

25. A process in accordance with one of the preceding claims,
**characterised in that**
the catalyst (10) is able to store one or more of the following exhaust emission components: nitrogen oxide, carbon monoxide, hydrocarbons or oxygen.

## Revendications (Revendications pour l'(les) Etat(s) contractant(s) suivant(s): DE, ES, FR, GB, IT, SE)

1. Procédé pour déterminer le degré de remplissage ou la qualité d'un catalyseur (10) accumulant des gaz au moyen d'un fluide d'accumulation (12), par mesure de la modification d'au moins une propriété physique, en particulier d'une propriété électrique ou électromagnétique, du fluide d'accumulation (12) qui se modifie avec l'opération d'accumulation, et dans lequel on mesure la modification de l'impédance électrique complexe ou la modification de la force thermique.

2. Procédé selon la revendication 1, **caractérisé en ce que** la mesure de l'impédance électrique complexe s'effectue à une ou à plusieurs fréquences parmi la plage de fréquences comprise entre 0 Hz, c'est-à-dire à tension continue, et une fréquence limite supérieure à laquelle la longueur d'onde correspondante à la fréquence de mesure est sensiblement inférieure aux dimensions de l'agencement de mesure.

3. Procédé selon l'une ou l'autre des revendications 1 et 2, **caractérisé en ce que** l'on mesure l'impédance électrique complexe au moyen d'un dispositif électrique comprenant au moins deux électrodes (22, 24, 32, 34, 42, 44, 52, 54, 62, 64, 76, 78), du fluide d'accumulation (12) accessible aux gaz d'échappement et se situant entre les électrodes (22, 24, 32, 34, 42, 44, 52, 54, 62, 64, 76, 78).

4. Procédé selon l'une des revendications précédentes, **caractérisé en ce que** le catalyseur (10) présente une structure porteuse monolithique pourvue de canaux (14), sur laquelle on dépose le fluide d'accumulation (12) en forme de couches.

5. Procédé selon les revendications 3 et 4, **caractérisé en ce que** l'on agence les électrodes (22, 24, 32, 34, 52, 54) sur une paroi intérieure (16) de la structure porteuse.

6. Procédé selon les revendications 3 et 4, **caractérisé en ce que** l'on agence les électrodes (52, 54) sur une paroi intérieure (16) de la structure porteuse, et **en ce que** l'on dépose le fluide d'accumulation (12) en forme de couches sur les électrodes (52, 54).

7. Procédé selon les revendications 3 et 4, **caractérisé en ce que** l'on dépose le fluide d'accumulation (12) en forme de couches sur les parois intérieures (16) de la structure porteuse, et **en ce que** l'on agence les électrodes (42, 44) sur le fluide d'accumulation (12).

8. Procédé selon l'une des revendications 4 à 7, **caractérisé en ce que** l'on agence les électrodes (22, 24, 32, 34, 42, 44, 52, 54, 62, 64) en direction axiale ou radiale par rapport à la structure porteuse.

9. Procédé selon la revendication 1, **caractérisé en ce que** l'on mesure la force thermique au moyen d'un dispositif comprenant au moins deux paires d'éléments thermiques (104, 106, 108, 110).

10. Procédé pour déterminer le degré de remplissage ou la qualité d'un catalyseur (10) accumulant des gaz au moyen d'un fluide d'accumulation (12), dans lequel on agence, en supplément au catalyseur (10) dans le courant des gaz d'échappement, un fluide (86, 96) identique ou similaire au fluide d'accumulation (12) du catalyseur (10) à l'égard de ses propriétés physiques, en particulier de ses propriétés électriques ou électromagnétiques, par mesure de la modification d'au moins une propriété physique, en particulier d'une propriété électrique ou électromagnétique, du fluide (86, 96) identique ou similaire qui se modifie avec l'opération d'accumulation, et dans lequel on mesure la modification de l'impédance électrique complexe du fluide (86, 96) ou la modification de la force thermique du fluide (86, 96).

11. Procédé selon la revendication 10, **caractérisé en ce que** la mesure de l'impédance électrique complexe s'effectue à une ou à plusieurs fréquences parmi la plage de fréquences comprise entre 0 Hz, c'est-à-dire à tension continue, et une fréquence limite supérieure à laquelle la longueur d'onde correspondante à la fréquence de mesure est sensiblement inférieure aux dimensions de l'agencement de mesure.

12. Procédé selon l'une ou l'autre des revendications 10 et 11,
**caractérisé en ce que** l'on mesure l'impédance électrique complexe au moyen d'un agencement, ledit agencement comprenant un substrat (82, 94) sur une face plate duquel est déposée une structure formant conducteur ou électrode (84, 92) et sur l'autre face plate duquel est déposé un chauffage électrique (88), le fluide (86, 96) étant déposé sur la face plate pourvue de la structure formant conducteur ou électrode (84, 92).

13. Procédé selon la revendication 12, **caractérisé en ce que** le substrat (82, 94) est constitué de silicium, de quartz ou d'une céramique, et le chauffage électrique (88) comprend des bandes de métal d'une épaisseur de 100 nm à 50 µm, et la structure formant conducteur ou électrode (84, 92) est constituée de métal et présente une épaisseur de couche comprise entre 100 nm et 1000 µm.

14. Procédé selon la revendication 10, **caractérisé en ce que** l'on mesure la force thermique au moyen d'un agencement, ledit agencement comprenant un substrat (102) sur une face plate duquel est déposé un chauffage électrique et sur l'autre face plate duquel est déposé le fluide (112) ainsi qu'au moins deux paires d'éléments thermiques (104, 106, 108, 110).

15. Procédé selon la revendication 14, **caractérisé en ce que** le substrat (102) est constitué de silicium, de quartz ou d'une céramique, et **en ce que** le chauffage électrique comprend des bandes de métal d'une épaisseur de 100 nm à 50 µm.

16. Procédé selon l'une des revendications précédentes, **caractérisé en ce que** l'on peut utiliser le catalyseur (10) à des fins de purification de gaz d'échappement dans un véhicule automobile.

17. Procédé selon l'une des revendications précédentes, **caractérisé en ce que** le catalyseur (10) peut accumuler une ou plusieurs parmi les composantes de gaz d'échappement que sont des oxydes azotiques, du monoxyde de carbone, des hydrocarbures ou de l'oxygène.

## Revendications (Revendications pour l'(les) Etat(s) contractant(s) suivant(s): AT, BE, CH/LI, IE)

1. Procédé pour déterminer le degré de remplissage ou la qualité d'un catalyseur (10) accumulant des gaz au moyen d'un fluide d'accumulation (12),
**caractérisé en ce que** l'on mesure la modification d'au moins une propriété physique du fluide d'accumulation (12), modification qui apparaît par interaction chimique entre le fluide d'accumulation et les gaz accumulés au cours de l'opération d'accumulation et, en se basant sur les résultats de mesure on détermine le degré de remplissage ou la qualité du catalyseur (10).

2. Procédé selon la revendication 1, **caractérisé en ce que** l'on mesure la modification de l'impédance électrique complexe.

3. Procédé selon la revendication 2, **caractérisé en ce que** la mesure de l'impédance électrique complexe s'effectue à une ou à plusieurs fréquences parmi la plage de fréquences comprise entre 0 Hz, c'est-à-dire à tension continue, et une fréquence limite supérieure à laquelle la longueur d'onde correspondante à la fréquence de mesure est sensiblement inférieure aux dimensions de l'agencement de mesure.

4. Procédé selon l'une des revendications 1 à 3, **caractérisé en ce que** l'on mesure l'impédance électrique complexe au moyen d'un dispositif électrique comprenant au moins deux électrodes (22, 24, 32, 34, 42, 44, 52, 54, 62, 64, 76, 78), du fluide d'accumulation (12) accessible aux gaz d'échappement et se situant entre les électrodes (22, 24, 32, 34, 42, 44, 52, 54, 62, 64, 76, 78).

5. Procédé selon l'une des revendications précédentes, **caractérisé en ce que** le catalyseur (10) présente une structure porteuse monolithique pourvue de canaux (14), sur laquelle on dépose le fluide d'accumulation (12) en forme de couches.

6. Procédé selon les revendications 4 et 5, **caractérisé en ce que** l'on agence les électrodes (22, 24, 32, 34, 52, 54) sur une paroi intérieure (16) de la structure porteuse.

7. Procédé selon les revendications 4 et 5, **caractérisé en ce que** l'on agence les électrodes (52, 54) sur une paroi intérieure (16) de la structure porteuse, et **en ce que** l'on dépose le fluide d'accumulation (12) en forme de couches sur les électrodes (52, 54).

8. Procédé selon les revendications 4 et 5, **caractérisé en ce que** l'on dépose le fluide d'accumulation (12) en forme de couches sur les parois intérieures (16) de la structure porteuse, et **en ce que** l'on agence les électrodes (42, 44) sur le fluide d'accumulation (12).

9. Procédé selon l'une des revendications 5 à 8, **caractérisé en ce que** l'on agence les électrodes (22, 24, 32, 34, 42, 44, 52, 54, 62, 64) en direction axiale ou radiale par rapport à la structure porteuse.

10. Procédé selon la revendication 1, **caractérisé en ce que** l'on mesure la modification de la force thermique.

11. Procédé selon la revendication 10, **caractérisé en ce que** l'on mesure la force thermique au moyen d'un dispositif comprenant au moins deux paires d'éléments thermiques (104, 106, 108, 110).

12. Procédé selon la revendication 1, **caractérisé en ce que** l'on mesure la modification de l'indice de réfraction optique ou du coefficient d'absorption ou de réflexion optique.

13. Procédé selon la revendication 1, **caractérisé en ce que** l'on mesure la modification de la masse ou du volume.

14. Procédé pour déterminer le degré de remplissage ou la qualité d'un catalyseur (10) accumulant des gaz au moyen d'un fluide d'accumulation (12),
**caractérisé en ce que** l'on agence, en supplément au catalyseur (10) dans le courant des gaz d'échappement, un fluide (86, 96) identique ou similaire au fluide d'accumulation (12) du catalyseur (10) à l'égard de ses propriétés physiques, et on mesure la modification d'au moins une propriété physique du fluide (86, 96) identique ou similaire qui se modifie avec l'opération d'accumulation, et en se basant sur ces résultats, on détermine le degré de remplissage ou la qualité du catalyseur (10).

15. Procédé selon la revendication 14, **caractérisé en ce que** l'on mesure la modification de l'impédance électrique complexe du fluide (86, 96).

16. Procédé selon la revendication 15, **caractérisé en ce que** la mesure de l'impédance électrique complexe s'effectue à une ou à plusieurs fréquences parmi la plage de fréquences comprise entre 0 Hz, c'est-à-dire à tension continue, et une fréquence limite supérieure à laquelle la longueur d'onde correspondante à la fréquence de mesure est sensiblement inférieure aux dimensions de l'agencement de mesure.

17. Procédé selon l'une des revendications 14 à 16, **caractérisé en ce que** l'on mesure l'impédance électrique complexe au moins d'un agencement, ledit agencement comprenant un substrat (82, 94) sur une face plate duquel est déposée une structure formant conducteur ou électrode (84, 92) et sur l'autre face plate duquel est déposé un chauffage électrique (88), le fluide (86, 96) étant déposé sur la face plate pourvue de la structure formant conducteur ou électrode (84, 92).

18. Procédé selon la revendication 17, **caractérisé en ce que** le substrat (82, 94) est constitué de silicium, de quartz ou d'une céramique, et le chauffage électrique (88) comprend des bandes de métal d'une épaisseur de 100 nm à 50 µm, et la structure formant conducteur ou électrode (84, 92) est constituée de métal et présente une épaisseur de couche comprise entre 100 nm et 1000 µm.

19. Procédé selon la revendication 14, **caractérisé en ce que** l'on mesure la modification de la force thermique du fluide.

20. Procédé selon la revendication 19, **caractérisé en ce que** l'on mesure la force thermique au moyen d'un agencement, ledit agencement comprenant un substrat (102) sur une face plate duquel est déposé un chauffage électrique et sur l'autre face plate duquel est déposé le fluide (112) ainsi qu'au moins deux paires d'éléments thermiques (104, 106, 108, 110).

21. Procédé selon la revendication 20, **caractérisé en ce que** le substrat (102) est constitué de silicium, de quartz ou d'une céramique, et **en ce que** le chauffage électrique comprend des bandes de métal d'une épaisseur de 100 nm à 50 µm.

22. Procédé selon la revendication 14, **caractérisé en ce que** l'on mesure la modification de l'indice de réfraction optique ou du coefficient d'absorption ou de réflexion optique du fluide.

23. Procédé selon la revendication 14, **caractérisé en ce que** l'on mesure la modification de la masse ou du volume.

24. Procédé selon l'une des revendications précédentes, **caractérisé en ce que** l'on peut utiliser le catalyseur (10) à des fins de purification de gaz d'échappement dans un véhicule automobile.

25. Procédé selon l'une des revendications précédentes, **caractérisé en ce que** le catalyseur (10) peut accumuler une ou plusieurs parmi les composantes de gaz d'échappement que sont des oxydes azotiques, du monoxyde de carbone, des hydrocarbures ou de l'oxygène.
